Europäisches Patentamt

European Patent Office

Office européen des brevets

(11) Publication number: 0 606 666 A1

# EUROPEAN PATENT APPLICATION

(21) Application number: 93200074.8

(51) Int. Cl.5: G06F 13/40

(22) Date of filing: 13.01.93

(43) Date of publication of application:
20.07.94 Bulletin 94/29

(84) Designated Contracting States:
AT BE CH DE DK ES FR GB GR IE IT LI LU MC
NL PT SE

(71) Applicant: BELL TELEPHONE
MANUFACTURING COMPANY Naamloze
Vennootschap
Francis Wellesplein 1
B-2018 Antwerp(BE)

(72) Inventor: Van Der Elst, Danny Pierre
Grote Steenweg 146
B-9870 Zulte (Olsene)(BE)

(74) Representative: Vermeersch, Robert et al
BELL TELEPHONE MANUFACTURING
COMPANY
Naamloze Vennootschap
Patent Department
Francis Wellesplein 1
B-2018 Antwerpen (BE)

(54) Processor arrangement and peripheral circuit.

(57) A processor arrangement (SX,BP1,BP2,ADS,PERS/ DX, BP3,BP4,ADD,PERD) with a processor (SX/ DX), a peripheral circuit (PERS/ PERD) and a processor interface (BP1,BP2,AD/ BP3, BP4,AD2) between them including a conversion device (ADS/ ADD), is disclosed. The conversion device (ADS/ ADD) converts address and data bus control signals of the processor (SX/ DX) to address and data bus control signals suited for the peripheral circuit (PERS/ PERD). The conversion device (ADS/ ADD) is built from multiplexers and has a disable input (ENADS/ ENADD) allowing it to be put in a high impedance state without giving rise to timing problems, even when used in combination with a high speed processor (SX/ DX).

FIG. I

EP 0 606 666 A1

The present invention relates to a processor arrangement including a processor with a processor address bus, a processor data bus and processor data bus control lines, a peripheral circuit with a periphery address bus, a periphery data bus and periphery data bus control lines, processor and periphery addresses and processor and periphery data being provided on the respective ones of said processor and periphery address and data buses, data bus control signals being provided on the respective ones of said data bus control lines, and a disabling means which when activated allows said peripheral circuit to gain control over its periphery buses and control lines.

Such a processor arrangement which is generally known in the art is not applicable in case the processor and periphery data buses have different sizes. Indeed, as in this case it would be necessary to make use between the processor and the peripheral circuit of a conversion device for converting the processor addresses and processor data bus control signals to the periphery addresses and periphery data bus control signals, the peripheral circuit when given control over its periphery buses and control lines by the disabling means, would be adversely influenced by signals provided on the periphery address bus and periphery data bus control lines by the conversion device. For instance, when in order to give this control to the peripheral circuit the processor is disabled, then the input signals applied to the conversion device by the processor would be floating, i.e. unknown, and as a consequence also the signals appearing at the output of the conversion device would be unknown. However, these signals are not floating but drive respective lines to which they are applied, and would thus adversely affect the signals applied by the periphal circuit.

An object of the present invention is to provide a processor arrangement of the above type but which does not present this drawback, i.e. wherein the peripheral circuit is allowed to gain control over its periphery buses independently from the sizes of the intercoupled processor and periphery data buses.

According to the invention, this object is achieved due to the fact that said processor arrangement further includes a conversion device having a disable input coupled to said disabling means and being disabled upon said disabling means being activated, said conversion device being adapted to convert said processor addresses and processor data bus control signals to said periphery addresses and periphery data bus control signals, respectively.

Because upon allowing the peripheral circuit to gain control over the periphery buses and control lines the conversion device is disabled, the latter device cannot adversely influence the peripheral circuit as its outputs are unknown but floating and, hence, do not drive respective lines to which they are applied.

To be noted that such a processor arrangement can be used for instance to upgrade a computer whilst maintaining the possibility of allowing the peripheral circuit to gain control over its data bus. Thus, e.g., a personal computer having an Intel 80386SX or 80376 processor the periphery of which operates with a 16-bit data bus, can be upgraded to work with an Intel 80386DX processor which has a 32-bit data bus.

Another characteristic feature of the conversion device according to the invention is that said conversion device includes multiplexers to convert said processor addresses and processor data bus control signals into said periphery addresses and periphery data bus control signals, and that said disable input is constituted by interconnected disable inputs of said multiplexers.

In this way, the conversion device providing the conversion itself is (more specifically the multiplexers thereof are) disabled when the processor is in its high impedance state. Thereby, no problems are encountered at high processor speeds. Indeed, as the same component which performs the conversion is the one which is disabled, delay introduced by the conversion device and able to cause the addresses, data bus control signals and data on the respective periphery buses to be no longer synchronized when the conversion device is not disabled, is minimized. To be noted that multiplexers are relatively cheap, thus providing a cost-effective implementation of the conversion device.

In another embodiment of the present processor arrangement, it also includes multiplexing means to perform multiplexing between said processor data bus and said periphery data bus, said processor has a bus size input, and a set signal thereon limits the size of the part of said processor data bus on which said data is transferred between said processor and said peripheral circuit.

In this way, when the size of the active part of the processor data bus is limited to the size of the periphery data bus or to a smaller size, data can be output from the multiplexing means at the rate it is input to it, since no more data can then be input at a time than can be output at a time.

Still a further feature of the conversion device according to the invention is that said processor data bus is an m-byte parallel bus, that said periphery data bus is an n-byte parallel bus, that both said processor data bus control signals and said periphery data bus control signals are byte enable signals indicating which byte(s) of the processor data bus and the periphery data bus respectively, are active, and that said processor has m byte enable signals, one for each byte of said processor data bus, whilst said peripheral circuit has n byte enable signals, one for each byte of said periphery data bus.

Thus, the conversion device according to the invention can e.g. be used with processors of the Intel 8086 family and the Motorola 68000 family since these processors provide such byte enable signals.

The above mentioned and other objects and features of the invention will become more apparent and the invention itself will be best understood by referring to the following description of an embodiment taken in conjunction with the accompanying drawings wherein :

Fig. 1 shows a processor arrangement according to the invention including a processor SX, a peripheral circuit PERS and a processor interface BP1/BP2/ADS;

Fig. 2 shows another processor arrangement according to the invention including a processor DX, a peripheral circuit PERD and a processor interface BP3/BP4/ADD;

Fig. 3 represents a conversion device ADS used in the processor interface BP1/BP2/ADS of Fig. 1;

Fig. 4 represents a conversion device ADD used in the processor interface BP3/BP4/ADD of Fig. 2.

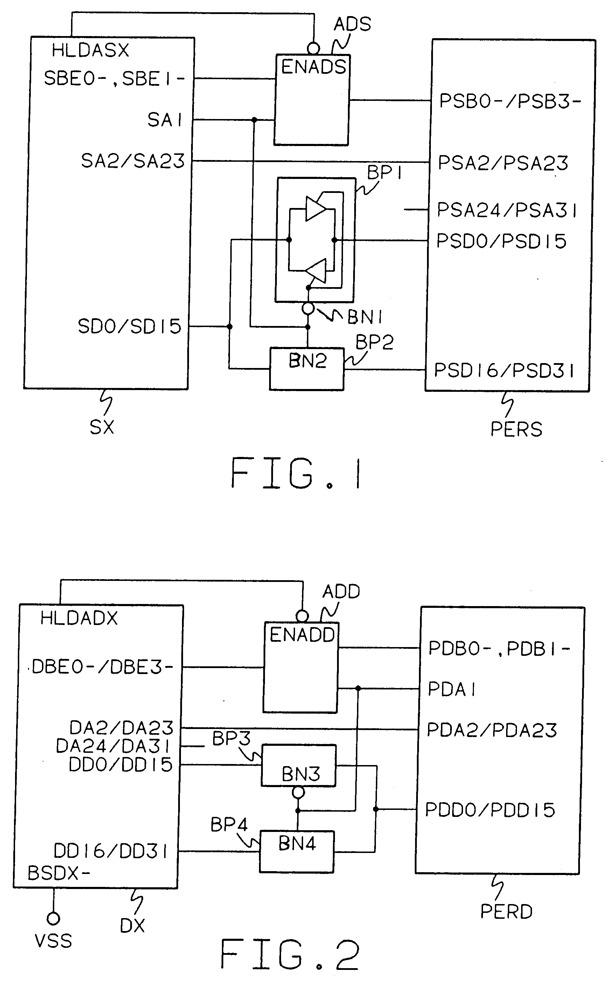

The processor SX used in the processor arrangement of Fig. 1, which is e.g. a processor 80386SX or 80376 of Intel, has a two-byte data bus with sixteen lines SD0 to SD15, an address bus with twenty-three lines SA1 to SA23, and two (data bus) control or byte enable lines SBE0- and SBE1-. Herein and in the following '-' indicates that a logical low level enables corresponding data bus bytes. SX furthermore has a disable or hold acknowledge output HLDASX providing a like named signal indicating that the processor SX is disabled, i.e. put in a high impedance state.

The peripheral circuit PERS of Fig. 1 has thirty-two periphery or generic data bus lines PSD0 to PSD31, thirty periphery or generic address bus lines PSA2 to PSA31 and four (data bus) control or byte enable lines PSB0- to PSB3-. To be noted that such a peripheral circuit PERS can directly, i.e. without interface, be connected to a processor for instance of the type 80386DX of Intel. Thus, the processor interface BP1/BP2/ADS of Fig. 1 provides an interface between a 80386SX-like processor and a 80386DX-like peripheral circuit.

BP1/BP2/ADS includes a conversion device or adapter ADS and a multiplexing means BP1/BP2 constituted of two bidirectional ports BP1 and BP2. Each of these bidirectional ports can for instance be constituted by two oppositely parallel coupled buffer units whose enable inputs are interconnected to constitute a common enable input. This is schematically shown in Fig. 1 only for BP1. A (not shown) power supply supplies power to the processor arrangement. It has a positive supply terminal VCC providing a like named positive supply voltage VCC corresponding to a high logical level, and a negative supply terminal VSS providing a like named negative supply voltage VSS corresponding to a low logical level.

Data bus lines SD0 to SD15 of SX are coupled to periphery data bus lines PSD0 to PSD15 via BP1 and to periphery data bus lines PSD16 to PSD31 via BP2. Address bus line SA1 is connected to complemented enable input BN1 of BP1 and to true enable input BN2 of BP2. The address bus lines SA2 to SA23 are directly connected to periphery address bus lines PSA2 to PSA23, whereas periphery address lines PSA24 to PSA31 are not connected with any lines of SX but are coupled to VCC via (not shown) resistors. The address line SA1 and byte enable lines SBE0- and SBE1- are connected to inputs of the adapter ADS, and HLDASX is connected to a disable input ENADS thereof. Outputs of ADS are connected to periphery byte enable lines PSB0- to PSB3-.

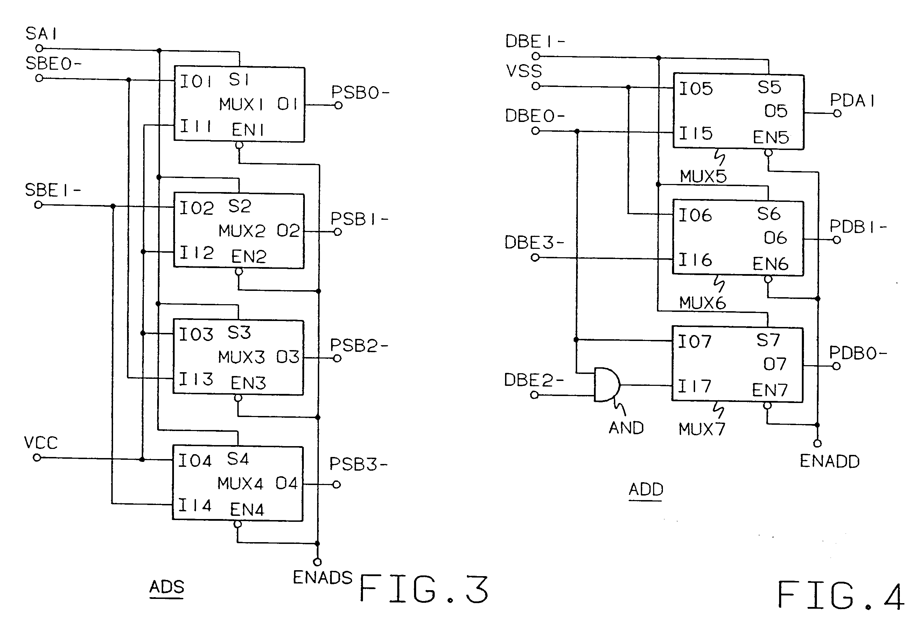

The adapter circuit ADS is shown in detail in Fig. 3. It includes four multiplexers MUX1 to MUX4 each having two inputs I01/I11 to I04/I14, respectively, an output, O1 to O4 respectively, a select input, S1 to S4 respectively, and a disable (i.e. complemented enable) input, EN1 to EN4 repectively. EN1 to EN4 are interconnected and constitute the disable input ENADS of ADS. S1 to S4 are all connected to SA1 of SX. SBE0- of SX is connected to input I01 of MUX1 and to input I13 of MUX3, whereas SBE1- of SX is connected to input I02 of MUX2 and I14 of MUX4. The inputs I11 of MUX1, I12 of MUX2, I03 of MUX3 and I04 of MUX4 are all connected to VCC. O1 to O4 constitute the respective outputs PSB0- to PSB3- of ADS connected to the respective like named inputs of PERS.

Another embodiment of the processor arrangement is shown in Fig. 2. The processor DX used therein is e.g. a processor 80386DX of Intel and has a four-byte data bus with thirty-two lines DD0 to DD31, an address bus with thirty lines DA2 to DA31, and four (data bus) control lines or byte enable lines DBE0- to DBE3-. DX furthermore has a disable or hold acknowledge output HLDADX providing a like named signal which when activated indicates that the processor DX is disabled, i.e. put in a high impedance state, and a bus size input BSDX- on which a low signal causes DX to provide or ask no more than two bytes of data at a time. To be noted that such a bus size input is provided on the processor 80386DX of Intel, but that in a general way it only needs to limit the data which is output from or requested to input to the processor at a time, to an amount the periphery data bus can handle at a time. DX is coupled to a peripheral circuit PERD which has sixteen periphery or generic data bus lines PDD0 to PDD15, twenty-three periphery or generic address bus lines PDA1 to PDA23 and two data bus control or byte enable lines PDB0- and PDB1-.

To be noted that such a peripheral circuit PERD can directly, i.e. without interface, be connected to a processor for instance of the type 80386SX of Intel. Thus, the processor interface BP3/BP4/ADD of Fig. 2 provides an interface between a 80386DX-like processor and a 80386SX-like peripheral circuit.

BP3/BP4/ADD includes a conversion device or adapter ADD and a multiplexing means BP3/BP4 constituted of two bidirectional ports BP3 and BP4 similar to BP1. A (not shown) power supply like the one of Fig. 1 supplies power to the transistor arrangement. VSS is connected to BSDX-.

Data bus lines DD0 to DD15 of DX are coupled to periphery data bus lines PDD0 to PDD15 via BP3, whereas data bus lines DD16 to DD31 are coupled to PDD0 to PDD15 via BP4. The address bus lines DA2 to DA23 are connected to periphery address bus lines PDA2 to PDA23, whereas address lines DA24 to DA31 are not connected to PERD but are coupled to VCC via (not shown) resistors. The byte enable lines DBE0- to DBE3- are connected to inputs of the adapter ADD, and HLDADX is connected to a disable input ENADD thereof. Outputs of ADD are connected to periphery byte enable lines PDB0- and PDB1- and to periphery address line PDA1. Address line PDA1 is furthermore connected to complemented enable input BN3 of BP3 and to true enable input BN4 of BP4.

The adapter circuit ADD is shown in detail in Fig. 4. It includes three multiplexers MUX5 to MUX7 each having two inputs I05/I15 to I07/I17 respectively, an output, O5 to O7 respectively, a select input, S5 to S7 respectively, and a disable (i.e. complemented enable) input, EN5 to EN7 respectively. EN5 to EN7 are interconnected and constitute the disable input ENADD of ADD. S5 to S7 are all connected to byte enable line DBE1- of DX. Input I05 of MUX5 and input I06 of MUX6 are both connected to VSS. Inputs I15 of MUX5 and I07 of MUX7 are connected to DBE0- of DX which is also connected to a first input of a logical and gate AND. A second input of AND is connected to DBE2- of DX and the output of AND is connected to the input I17 of MUX7. Input I16 of MUX6 is connected to DBE3- of DX. O5 to O7 constitute respective outputs PDA1, PDB1- and PDB0- of ADD connected to the like named inputs of PERD.

Following is now, with reference to the drawings, a description of the operation of the processor arrangements and of the conversion devices.

Referring to Figs. 1 and 3, the address lines PSA2 to PSA31 of PERS address four-byte data the active bytes of which are indicated by the four byte enable lines PSB0- to PSB3-, i.e. when for instance PSB1- is low then the second byte of the four-byte data is active. Thus, considering PERS as a memory, it has memory locations each constituted of four bytes and an address provided on its address lines indicates such a four-byte memory location. On the other hand, the address lines of SX address two-byte data the active bytes of which are indicated by the two byte enable lines SBE0- and SBE1-, i.e. when for instance SBE0- is low then the first byte of the two-byte data is active. Consequently, in order for a memory with memory locations constituted of four bytes to be addressed by SX, the address and byte enable signals provided by SX are converted or adapted by ADS to address and byte enable signals for PERS. To be noted that the latter address and byte enable signals are suited for the 80386DX-like peripheral circuit mentioned above.

In a general way, ADS converts the processor addresses and processor byte enable signals according to the following equations **(1)** and **(2)**. Herein, $A_{pr}$ represents the processor address, $A_{per}$ the periphery address, the minimal value of both $A_{pr}$ and $A_{per}$ being zero, $m$ is the size of the processor data bus, $n$ the size of the periphery data bus, $k_{pr}$ indicates the active part of the processor data bus and can be any integer from 1 to $m$, $k_{per}$ indicates the active part of the periphery data bus and can be any integer from 1 to $n$, and [$x$] indicates the integer part of $x$ :

$$A_{per} = \left[ \frac{A_{pr} \times m + k_{pr} - 1}{n} \right] \qquad (1)$$

$$k_{per} = A_{pr} \times m + k_{pr} - A_{per} \times n \qquad (2)$$

Thus, in the above equations **(1)** and **(2)** $k_{pr}$ and $k_{per}$ indicate the respective data bus control signals.

When $n$ is an integer multiple of $m$, as is to be implemented in ADS, it follows from **(1)** and **(2)** that :

$$A_{per} = \left\lceil \frac{A_{pr}}{\alpha} \right\rceil$$

$$k_{per} = (A_{pr} - \left\lceil \frac{A_{pr}}{\alpha} \right\rceil \times \alpha) \times m + k_{pr}$$

in which $\alpha$ is the integer multiple.

On the other hand, when $m$ is an integer multiple of $n$, as is the case in ADD, it follows from **(1)** and **(2)** that :

$$A_{per} = \beta \times A_{pr} + \left\lceil \frac{k_{pr} - 1}{n} \right\rceil$$

$$k_{per} = k_{pr} - n \times \left\lceil \frac{k_{pr} - 1}{n} \right\rceil$$

in which $\beta$ is the latter integer multiple.

More specifically, the principle implemented in ADS is that a memory with memory locations constituted of four bytes can be seen as a memory with memory locations constituted of two memory sublocations each constituted of two bytes. Each of these memory sublocations can be addressed by the addresses provided on the address lines of SX since SA2 to SA23 provide an address for a memory location whilst SA1 indicates which of the two memory sublocations is to be addressed. SBE0- and SBE1- indicate which byte(s) of the addressed memory sublocation is (are) active. Thus, ADS has to realize the following truth table.

| SX | | | PERS | | | |
|---|---|---|---|---|---|---|
| SA1 | SBE1- | SBE0- | PSB3- | PSB2- | PSB1- | PSB0- |
| 0 | 0 | 0 | 1 | 1 | 0 | 0 |
| 0 | 1 | 0 | 1 | 1 | 1 | 0 |
| 0 | 0 | 1 | 1 | 1 | 0 | 1 |
| 1 | 0 | 0 | 0 | 0 | 1 | 1 |
| 1 | 1 | 0 | 1 | 0 | 1 | 1 |
| 1 | 0 | 1 | 0 | 1 | 1 | 1 |

When SA1 is low (0 in the above truth table) then the lowest memory sublocation is addressed, i.e. PSB2- and PSB3- are both high (1 in the above truth table) and PSB0- and PSB1- correspond to SBE0- and SBE1-, whereas the opposite applies when SA1 is high. It should be noted that instead of the implementation of this truth table as shown in Fig. 3, another implementation, e.g. with logical gates is possible. In order when SX is in its high impedance state to prevent the lines SA1, SBE0- and SBE1- which are then floating and hence at an unknown signal level to influence the level on the lines PSB0- to PSB3-, a disable input signal (ENADS of Fig. 3) controlled by HLDASX and putting ADS in a high impedance state when HLDASX is high, must be provided on ADS. Indeed, the signals provided by the lines PSB0- to PSB3- would then be unknown but not floating and would hence adversely influence these lines, which is avoided by applying HLDASX provided by SX (which thus acts as a disabling means) to ENADS. Thus, the implementation of the truth table with logical gates as mentioned above should e.g. be followed by tri-state buffers in order to be able to put ADS in a high impedance state. However, at high operation speeds of the processor, e.g. at clock speeds of 33 MHz, such a solution would not be satisfactory since additional time delays inherently introduced by the buffers would cause the data bus control signals to be no longer synchronized with the address at such speeds. Due to the fact that for the used multiplexers the high impedance control signal for ADS is provided to the same component (i.e. the multiplexer) in which the conversion takes place, the above synchronization problem is not encountered in the present invention.

To be noted that ENADS is not necessary when no high impedance request for disabling SX is expected.

As to the not connected address lines PSA24 to PSA31, it is clear that the whole memory capacity of PERS can not be addressed by SX, which is however intrinsically unavoidable as PERS has a memory capacity of a total of $2^{32}$ bytes ($2^{30}$ times 4), whereas SX can only address a memory capacity of $2^{24}$ bytes ($2^{23}$ times 2). However, the unaddressed part of PERS may still be addressed via so-called paging techniques well known in the art of computer design and not discussed here since they are no part of the invention. To be noted that the purpose of the conversion device ADS is to efficiently address the peripheral circuit rather than to be able to address the whole of the peripheral circuit.

The data bus of SX is connected to the generic data bus via the bidirectional ports BP1 and BP2. When SA1 is low then SD0 to SD15 of SX are coupled to generic lines PSD0 to PSD15, i.e. to the lower two bytes of the four-byte memory location addressed by the address lines SA2 to SA23 of SX, whereas when SA1 is high, SD0 to SD15 of SX are coupled to generic lines PSD16 to PSD31, i.e. to the upper two bytes of the four-byte memory location addressed by the address lines SA2 to SA23 of SX. It should be noted here that when the peripheral circuit has a bus size line with which the active part of the periphery data bus can be limited to only the lower two periphery data bus bytes, then bidirectional ports BP1 and BP2 are not needed. The processor data bus can then be directly connected to these lower two periphery data bus bytes and the upper two periphery data bus bytes are then connected to VCC via pull-up resistors.

Referring now to Fig. 2, the address lines PDA1 to PDA23 of PERD address two-byte data the active bytes of which are indicated by the two byte enable lines PDB0- and PDB1-, i.e. when for instance PDB0- is low then the first byte of the two-byte data is active. Thus, considering PERD as a memory, it has memory locations each constituted of two bytes and an address provided on its address lines indicates such a two-byte memory location. On the other hand, the address lines of DX address four-byte data the active bytes of which are indicated by the four byte enable lines DBE0- to DBE3-, i.e. when for instance DBE2- is low then the third byte of the four-byte data is active. Consequently, in order for a memory with memory locations constituted of two bytes to be addressed by DX, the address and byte enable signals provided by DX are converted or adapted by ADD to address and byte enable signals for PERD.

To be noted that the latter address and byte enable signals are suited for the above 80386SX-like peripheral circuit.

The principle implemented in ADD is that a memory location constituted of four bytes can be seen as a memory superlocation constituted of two memory locations each constituted of two bytes. Thus, each of the latter memory locations is addressed by the addresses provided on the address lines of DX since DA2 to DA23 provide an address for a memory superlocation whilst DBE0- to DBE3- indicate which of the two memory locations thereof is to be addressed and which byte(s) of the addressed memory location is (are) active. When DBE0- or DBE1- is low then the first of the two memory locations is addressed. Thus, ADD has to realize the following truth table.

| DX | | | | PERD | | |
|---|---|---|---|---|---|---|
| DBE3- | DBE2- | DBE1- | DBE0- | PDA1 | PDB1- | PDB0- |
| 1 | 1 | 1 | 0 | 0 | 1 | 0 |
| 1 | 1 | 0 | 1 | 0 | 0 | 1 |
| 1 | 0 | 1 | 1 | 1 | 1 | 0 |
| 0 | 1 | 1 | 1 | 1 | 0 | 1 |
| 1 | 1 | 0 | 0 | 0 | 0 | 0 |
| 1 | 0 | 0 | 1 | 0 | 0 | 1 |
| 0 | 0 | 1 | 1 | 1 | 0 | 0 |
| 1 | 0 | 0 | 0 | 0 | 0 | 0 |
| 0 | 0 | 0 | 1 | 0 | 0 | 1 |
| 0 | 0 | 0 | 0 | 0 | 0 | 0 |

When DBE0- or DBE1- is low (0 in the above truth table) then a memory location where SA1 is low (the first of the two memory locations of the above memory superlocation), is addressed, i.e. PDB0- and PDB1- correspond to DBE0- and DBE1-, whereas when both DBE0- and DBE1- are high (1 in the truth table) PDB0- and PDB1- correspond to DBE2- and DBE3-. It should be noted that instead of the implementation of this truth table as shown in Fig. 4, another implementation, e.g. with logical gates as known in the art, is possible. In order to prevent that when DX is in its high impedance state the lines DBE02 to DBE32, which are then floating and, hence, unknown, influence the level on the generic bus and byte enable lines, a disable input (ENADD of Fig. 4) controlled by HLDADX and putting ADD in a high impedance state when HLDADX is low, must be provided on ADD. As SX for ADS, DX here acts as a disabling means. The same remarks as for Fig. 3 with respect to synchronization problems at critical speeds of the processor DX apply here. As to the logical gate AND used in the conversion device shown in Fig. 4, it can be shown that the implementation of Fig. 4 provides a faster conversion device than an implementation with logical gates and tri-state buffers but without multiplexers.

It should also be noted that since BSDX- is connected to VSS (logical low level) the processor DX automatically performs a new bus cycle when one or both of the upper two bytes of the processor data bus (indicated by DBE2- and DBE3-) as well as one or both of the lower two bytes of the processor data bus (indicated by DBE0- and DBE1-) are active during a bus cycle. The upper two bytes are then during the new bus cycle repeated on the lower two processor data bus bytes. Hence, the amount of data provided or required by DX is in fact limited to two bytes at a time.

As to the not connected address lines DA24 to DA31, it is clear that DX is able to address a larger memory than that of PERD. This unused address capacity can be used to expand the peripheral circuit PERD. To be noted that as for ADS the purpose of the conversion device ADD is to efficiently address the peripheral circuit rather than to be able to address the whole of the peripheral circuit.

The data bus of DX is connected to the generic data bus via the bidirectional ports BP3 and BP4. When PDA1 is low then DD0 to DD15 of DX are coupled to generic lines PDD0 to PDD15, whereas when PDA1 is high, DD16 to DD31 of SX are coupled to generic lines PDD0 to PDD15.

While the principles of the invention have been described above in connection with specific apparatus, it is to be clearly understood that this description is made only by way of example and not as a limitation on the scope of the invention.

## Claims

1. Processor arrangement (SX, BP1, BP2, ADS, PERS/ DX, BP3, BP4, ADD, PERD) including a processor (SX/ DX) with a processor address bus (SA1..SA23/ DA2..DA31), a processor data bus (SD0..SD15/ DD0..DD31) and processor data bus control lines (SBE0-,SBE1-/ DBE0-..DBE3-), a peripheral circuit (PERS/ PERD) with a periphery address bus (PSA2..PSA31/ PDA1..PDA23), a periphery data bus (PSD0..PSD31/ PDD0..PDD15) and periphery data bus control lines (PSB0-..PSB3-/ PDB0-,PDB1-), processor and periphery addresses and processor and periphery data being provided on the respective ones of said processor and periphery address and data buses, data bus control signals being provided on the respective ones of said data bus control lines, and a disabling means (SX/ DX) which when activated allows said peripheral circuit (PERS/ PERD) to gain control over its periphery buses and control lines, characterized in that it further includes a conversion device (ADS/ ADD) having a disable input (ENADS/ ENADD) coupled to said disabling means (SX/ DX) and being disabled upon said disabling means (SX/ DX) being activated, said conversion device (ADS/ ADD) being adapted to convert said processor addresses and processor data bus control signals to said periphery addresses and periphery data bus control signals, respectively.

2. Processor arrangement (SX, BP1, BP2, ADS, PERS/ DX, BP3, BP4, ADD, PERD) according to claim 1, characterized in that said conversion device (ADS/ ADD) includes multiplexers (MUX1..MUX4/ MUX5..MUX7) to convert said processor addresses and processor data bus control signals into said periphery addresses and periphery data bus control signals, and that said disable input (ENADS/ ENADD) is constituted by interconnected disable inputs (EN1..EN4/ EN5..EN7) of said multiplexers.

3. Processor arrangement (SX, BP1, BP2, ADS, PERS/ DX, BP3, BP4, ADD, PERD) according to claim 1, characterized in that it also includes multiplexing means (BP1, BP2/ BP3, BP4) to perform multiplexing between said processor data bus (SD0..SD15/ DD0..DD31) and said periphery data bus (PSD0..PSD31/ PDD0..PDD15).

4. Processor arrangement (DX, BP3, BP4, ADD, PERD) according to claim 3, characterized in that said processor (DX) has a bus size input (BSDX-), and that a set signal thereon limits the size of the part of said processor data bus (DD0..DD31) on which said data is transferred between said processor (DX) and said peripheral circuit (PERD).

5. Processor arrangement (SX, BP1, BP2, ADS, PERS/ DX, BP3, BP4, ADD, PERD) according to claim 1, characterized in that said processor data bus (SD0..SD15/ DD0..DD31) is an m-byte parallel bus, that said periphery data bus (PSD0..PSD31/ PDD0..PDD15) is an n-byte parallel bus, that both said processor data bus control signals (SBE0-,SBE1-/ DBE0-..DBE3-) and said periphery data bus control signals (PSB0-..PSB3-/ PDB0-,PDB1-) are byte enable signals indicating which byte(s) of the processor data bus (SD0..SD15/ DD0..DD31) and the periphery data bus (PSD0..PSD31/ PDD0..PDD15) respectively, are active.

6. Processor arrangement (SX, BP1, BP2, ADS, PERS/ DX, BP3, BP4, ADD, PERD) according to claim 5, characterized in that said processor (SX/ DX) has m byte enable signals (SBE0-,SBE1-/ DBE0-..DBE3-), one for each byte of said processor data bus (SD0..SD15/ DD0..DD31), whilst said peripheral circuit (PERS/ PERD) has n byte enable signals (PSB0-..PSB3-/ PDB0-,PDB1-), one for each byte of said periphery data bus (PSD0..PSD31/ PDD0..PDD15).

7. Processor arrangement (DX, BP3, BP4, ADD, PERD) according to claims 4 and 5, characterized in that m is an integer multiple of n, and that the size of the part of said processor data bus (DD0..DD31) on which said data is transferred, is limited to at most n by said bus size input signal (BSDX-).

8. Processor arrangement (SX, BP1, BP2, ADS, PERS) according to claim 5, characterized in that n is an integer multiple of m.

9. Processor arrangement (SX, BP1, BP2, ADS, PERS/ DX, BP3, BP4, ADD, PERD) according to claim 5, characterized in that both m and n are a power of two.

FIG.1

FIG.2

FIG.4

ADD

FIG.3

ADS

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 482 589 (TOSHIBA)<br>* column 1, line 11 - column 2, line 9; figures 1,2 *<br>--- | 1-9 | G06F13/40 |
| A | EP-A-0 472 274 (INTERNATIONAL BUSINESS MACHINES CORPORATION)<br>* page 3, line 21 - line 39 *<br>* page 6, line 20 - page 7, line 39 *<br>* page 8, line 23 - line 43; figures 6-8 *<br>--- | 1-9 | |
| A | IBM TECHNICAL DISCLOSURE BULLETIN.<br>vol. 33, no. 3B, August 1990, NEW YORK US pages 112 - 113 '32-BIT MEMORY SUBSYSTEM SUPPORTS INTEL 80386 AND 80386SX PROCESSORS'<br>* the whole document *<br>----- | 1-9 | |

TECHNICAL FIELDS
SEARCHED (Int. Cl.5 )

G06F

The present search report has been drawn up for all claims

| Place of search | Date of completion of the search | Examiner |
|---|---|---|
| THE HAGUE | 16 AUGUST 1993 | NYGREN P.P. |

EPO FORM 1503 03.82 (P0401)